# EUROPEAN PATENT APPLICATION

(11) **EP 2 146 226 A1**
(43) Date of publication of application: **20.01.2010**
(21) Application number: 08012720.2
(22) Date of filing: 14.07.2008
(51) Int. Cl.: G01V 5/00, G01T 7/00

(54) **Detector system for the measurement of radiation**

(71) Applicant: ICx Technologies GmbH, 42653 Solingen (DE)
(72) Inventor: Lentering, Ralf, 42659 Solingen (DE)
(74) Representative: Schramm, Michael

(57) **Abstract**

The invention relates to a detector module for measuring one or more types of radiation, comprising a detection unit, an analog-to-digital converter (50), an information processing device (40) performing a method of calibrating, stabilizing and linearizing the radiation signal, and a communication network interface (30A), whereby the information processing device performs a method of transmitting the calibrated, stabilized, linearized, and digitized radiation signal via the communication network interface to an analysis device (Fig.2). Furthermore, the invention relates to an analysis device for analyzing digital data, provided by the detector module data. Using at least one detector module and an analysis device a (wireless) network of detector modules can be provided.

## Description

This invention relates to a detector module for the measurement of one or more types of radiation, preferably X-ray, gamma, or nuclear particle radiation, comprising a detection unit consisting of a scintillation detector and a photodetector providing electronic pulses with a known relation to the intensity of the light produced by the scintillation detector, an analog-to-digital converter (ADC) coupled to the photodetector, where the ADC converts the analog output signal of the photodetector to a digitized radiation signal, and an information processing device coupled to the ADC, whereby the information processing device performs a method of calibrating, stabilizing and linearizing the digitized radiation signal.

Further, the present invention relates to an analysis device for analyzing digital data, preferably provided by a detector module. Yet further, the present invention relates to a detector system for detecting one or more types of radiation, preferably γ-radiation, X-ray, gamma, or nuclear particle radiation, comprising at least one detector module and an analysis device.

Detector systems consisting of a detector module and an analysis device are well known in the prior art. With the techniques known in the prior art, it is possible to provide a compact detector system for the measurement of ionizing radiation.

However, the known systems show the disadvantage, that in order to observe a number of different locations or places a number of detector systems are required. Using several detector systems in turn has the disadvantage that a centralized control of different locations is not possible or requires additional technical equipment.

It is a purpose of the present invention to provide a detector system in order to enable a centralized surveillance or observation of a number of places using a number of detector systems. It is another purpose of the invention to provide detector system, which allows observing a single location or place using a number of different detector systems, whereby analysis of the measurement can be performed centralized.

According to the invention, a detector system for detecting one or more types of radiation, in particular X-ray, gamma, or nuclear particle radiation is provided, comprising at least one detector module and an analysis device.

The detector module for measuring one or more types of radiation, in particular X-ray, gamma, or nuclear particle radiation may comprise a detection unit consisting of a scintillation detector and a photodetector providing electronic pulses with a known relation to the intensity of the light produced by the scintillation detector, an analog-to-digital converter (ADC) coupled to the photodetector, whereby the ADC converts the analog output signal of the photodetector to a digitized radiation signal, an information processing device coupled to the ADC, whereby the information processing device performs a method of calibrating, stabilizing and linearizing the digitized radiation signal, and a communication network interface, whereby the information processing device may transmit the calibrated, stabilized, and digitized radiation signal via the communication network interface to the analysis device.

Thus, analyzing the measurement of the detector module may be performed remotely from the detector module, e.g. centralized.

In a preferred embodiment, the information processing device may comprise at least one of a Digital Signal Processor (DSP), Application Specific Integrated Circuit (ASIC), Programmable Logic Device (PLD), and Microcontroller.

In another preferred embodiment, the information processing device may comprise a memory device for storing the digitized, calibrated, stabilized and linearized radiation signals. The method of calibrating, linearizing and stabilizing the digitized radiation signals may advantageously comprise a step of storing the calibrated, stabilized and linearized, and digitized radiation signal into the memory device. Storing the radiation signals may prevent loss of data when the data transmission to the analysis device is interrupted or out of order. Upon reestablishing the connection to the analysis device, the stored signals may be transferred to the analysis device.

The step of storing the calibrated, stabilized, linearized, and digitized radiation signal and the method of transmitting the calibrated, stabilized, linearized, and digitized radiation signal may be performed asynchronously. Thus, the detector module may receive signals even if the communication with the analysis device is at least temporarily not available.

In a further preferred embodiment of the invention, the communication network interface may be at least one of a wireless communications interface, e.g. WLAN, WiFi, WiMAX, or Bluetooth, and wired communications interface, e.g. Ethernet interface or USB interface.

The transmitted calibrated, stabilized, linearized, and digitized radiation signal may include a unique detector identifier. Thus, the signals of several detector modules may be discriminated by the analysis device.

The analysis device for analyzing digital data, preferably provided by a detector module via a communication network or communication interface may comprise a communication network interface for receiving digital data, preferably calibrated, stabilized, linearized, and digitized radiation signals corresponding to one or more types of radiation, in particular X-ray, gamma, or nuclear particle radiation, and a sorter, preferably a multi-channel analyzer (MCA) for generating energy spectra using the received digital data. Data (i.e. digitized radiation signals) may be received from multiple detector modules. Thus, the analysis device may be operated remotely from the several detector modules. Further, a network of detector modules may be built up, without the requirement of providing several detector modules each consisting of a detector module and an analysis device.

The MCA of the analysis device may be implemented in software or in specialized integrated circuits.

Further, the communication network interface of the analysis device may be at least one of a wireless communications interface, e.g. WLAN, WiFi, WiMAX or Bluetooth, and wired communications interface, e.g. Ethernet interface or USB interface.

In a preferred embodiment of the invention, the analysis device may comprise a storage device for storing a plurality of reference energy spectra and / or generated energy spectra. Further, combinations of reference energy spectra may be stored as further reference energy spectra.

Furthermore, the analysis device may comprise a storage device for storing the received digital data (transmitted by the detector module or detector modules), whereby the received digital data includes a unique detector identifier which is used to discriminate digital data received from different detector modules. Storing the received data may be necessary if the data should be reused for a further purpose, e.g. for a revision-safe archiving.

In a preferred embodiment, the analysis device may comprise a comparator which performs a method of comparing generated energy spectra with at least one of the stored reference energy spectra (template spectra) in order to determine whether or not a generated energy spectrum corresponds to at least one stored reference energy spectrum. The comparing method may be performed synchronously to the generation of the energy spectra. Thus, comparing an energy spectrum with a reference spectrum may be started even if the energy spectrum is not yet completely generated. A quasi-realtime detection of radiation signals can therefore be provided by the inventive detector system.

In a further embodiment, the analysis device may comprise means for determining single events from the received digital data.

A specific embodiment of the invention is described on the basis of the following figures.
- **Fig. 1**: shows an exemplary embodiment of a detector module, comprising scintillator crystal, a photo multiplier tube, a LED, an analog to digital converter and an information processing device;
- **Fig.2**: shows an exemplary embodiment of an analysis device; and
- **Fig. 3**: shows an example of comparing a measured energy spectrum with a number of reference energy spectra.

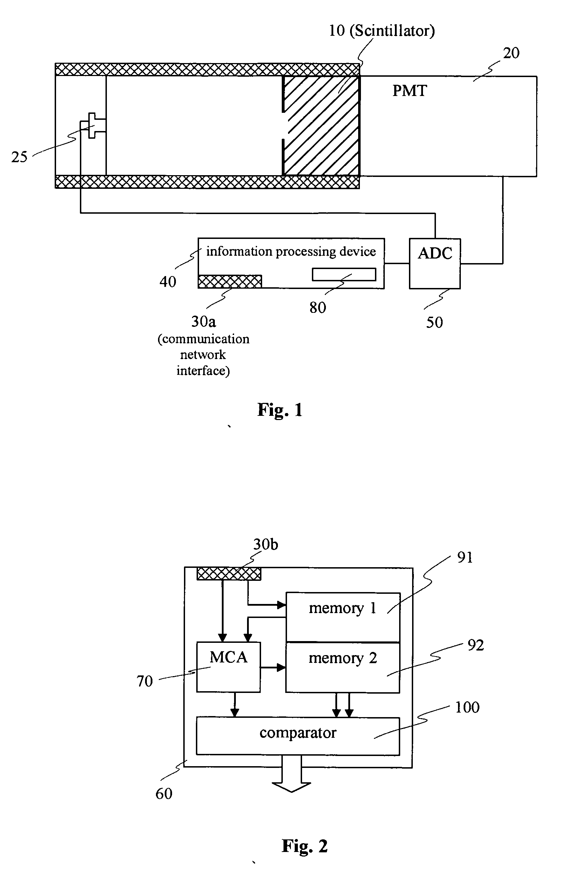

In **Fig. 1**, the main elements of an detector module can be seen, that is
a) a detector unit consisting of scintillation crystal 10, a photomultiplier 20 with a photocathode, serving as a light detector, and an LED 25, used for stabilizing the detector unit,
b) an information processing device 40 coupled to an analog to digital converter (ADC) 50, and
c) a communication network interface 30a.

Radiation (e.g. γ-radiation) enters the scintillation crystal 10 and is absorbed within this scintillation crystal. An excited state, following the absorption from the radiation, decays under the emission of light. The light is then directed to the photocathode, which, as a consequence of the light absorption, is emitting electrons. The resulting electric signal is amplified within the photomultiplier 20 and then forwarded to the detector electronics (not shown in Fig. 1).

At the same time, an LED 25 emits light, which passes the photomultiplier 20 when mounted within the photomultiplier 20 or passes the scintillation crystal 10 when mounted outside the photomultiplier as illustrated in Fig. 1. The emitted light is being absorbed by the photo cathode. The LED 25 preferably is operated in a pulsed mode; the resulting signals do have mainly rectangular shape.

In order to stabilize the detector module the radiation-induced signals and the LED induced signals have to be separated from each other. In order to separate those signals, the measured signals are digitized in a first step by the ADC 50.

The digitized signals are analyzed (e.g. the pulse height and/or the pulse shape) which allows separating the LED induced pulses from the radiation induced pulses.

In an additional step, the digitized radiation signal can be stabilized if necessary.

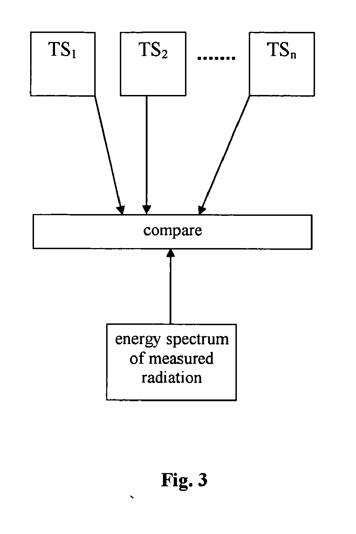

Further, the digitized radiation signals are linearized. Linearizing the signals independently in every detector module has the substantial advantage that the subsequent processing and/or analysis of the signals can be simplified and accelerated. For example, a number of linearized digitized radiation signals coming from different detector modules can be added easily (e.g. by an analysis device) without any additional adjustment of the signal. Further, a matching process can be performed more efficient when the radiation signals to be matched are provided in a linearized form. An example of a matching process is given below with reference to Fig. 3.

Analyzing, stabilizing and linearizing is performed by the information processing device 40, which is coupled to the ADC 50. The information processing device 80 may perform several other tasks, such as assigning an unique identifier to the signal or encoding the signal into a structured data format.

Further, the information processing device is coupled to a memory device 80, particularly for storing the digitized radiation signals. Thus, measurements of radiation signals can be performed without a subsequent step of analyzing the measurements. For this purpose, it is advantageous to store additionally a timestamp along with the stored radiation signals.

The detector module has a communication network interface 30a, which can be a part of the information processing device 40, as shown in Fig. 1. The calibrated, stabilized, and digitized radiation signals are transmitted via the communication network interface 30a to an analysis device.

In a further embodiment, raw data of the digitized radiation signals (i.e. radiation signals which are not calibrated, stabilized and linearized) can be transmitted via the interface 30a. Thus, expensive and complex calculations can be performed by device which receives the transmitted data.

It has to be mentioned, that storing the signals and transmitting the signals via the interface can be performed asynchronously.

As a result, the inventive detector module provides a digitized, calibrated, stabilized and linearized radiation signal, which can be transmitted via a communication interface to an analyzing device for further processing.

**Fig. 2** shows an example of an inventive analysis device, consisting of
a) a communication network interface 30b for receiving digital data, preferably calibrated, stabilized, linearized, and digitized radiation signals corresponding to one or more types of radiation, in particular X-ray, gamma, or nuclear particle radiation, form at least one detector module as described with reference to Fig. 1,
b) a sorter 70, preferably a multi-channel analyzer (MCA) for generating energy spectra using the received digital data,
c) a first memory device 91 and a second memory device 92, and
d) a comparator 100.

The data sent by the detector module over the interface 30a is received by the interface 30b of the analyzing module. The digitized data is forwarded to the MCA in which an energy spectrum according to the received data is generated. Additionally, the received data can be stored in a first memory device 91. This may be required for example if a revision-safe archiving is required or if the received data are required for further analysis.

In one embodiment, the first memory device 91 can be used for buffering the received data if the MCA 70 is not able to sort the received data in a rate as they is provided by the interface 30b.

Upon generating the energy spectrum, this can be stored in a second memory device 92. It is to be noted, that an energy spectrum can be stored with the memory device 92 even if generating the spectrum is not yet finished.

It has to be mentioned, that in further embodiment of the invention, a single memory device can be used for storing the received data and the generated energy spectrum or energy spectra.

For analyzing purposes, the generated energy spectrum is forwarded to a comparator, which is able to compare the energy spectrum with a number of predefined energy spectra (template spectra) of known and preferably often detected gamma decay schemes. A number of template spectra can be stored in the memory device 92 (or 91). The comparator 100 requests at least one of the stored template spectra and compares the requested spectrum with the spectrum forwarded by the MCA 70. If the requested spectrum matches the forwarded spectrum, the analyzing device may put out an alarm signal such as a sound signal.

In a further embodiment of the invention, the analysis device can receive via the interface device 30b digital data from a number of different detector modules. If digital data is transmitted wireless, a wireless network of detector modules can be set up, requireing only one analysis device. It is advantageous, when the transmitted data comprise an unique identifier (the unique identifier can be for example the Media Access Control (MAC) address, such enabling the analysis device to distinguish between different data of different detectors. As yet described above, the received data can be stored in the memory device 91 for archiving purposes or for buffering purposes.

All the received data are forwarded to the MCA 70, which adds (generates) the received data to an energy spectrum. Thus the generated energy spectrum can represent a spectrum of a single radiation source or of a number of different radiation sources, depending on the location of the different detector modules and the observed area of the modules. As each detector module provides digitized data comprising an unique identifier, the data can be assigned to the respective detector module, and therefore it can be determined which detector modules has measured which radiation source. This may be necessary and/or helpful when adding further analysis features to the detector system.

**Fig. 3** shows an example of a matching process. In order to provide an efficient detector network as described above, is advantageous when the analysis device is able to detect automatically a radiation source if the radiation source enters the observation area of an detector module. For this purpose, the present invention teaches the use of a template matching process. In general, a template matching process compares a measured energy spectrum with a predetermined energy spectrum in order to determine whether the measured energy spectrum corresponds to a predetermined energy spectrum.

Such a process is described by way of example only and with reference to Fig. 3. In first step a first template spectrum TS1 is compared with the measured spectrum. If TS1 matches the measured spectrum, the process may terminate or may continue by comparing the second template spectrum TS2 with the measured spectrum, preferably after the measured spectrum has been corrected by "subtracting" the first matching reference spectrum TS1.

Further, the background spectrum can be removed from the measured spectrum before beginning the matching process. Removing the background spectrum in turn can be performed by matching the measured spectrum with a template spectrum representing the background spectrum. The background spectrum can be measured using the inventive system, i.e. by using the detector module and the analysis device. The collected data by the detector module is transmitted to the analyzing module. The MCA 70 sorts the received data and stores the generated spectrum as a reference spectrum in the memory device 92. If a number of different detector modules are connected with the analysis device, different background spectra (one background spectrum for each module) can be determined and stored. Determining the background spectra can be performed automatically upon starting the detector module. Further, background spectra can be determined in predetermined time periods.

Thus, an efficient detector system for detecting radiation is provided, which enables building up a detector network, preferably a wireless detector network, whereby only a single analysis device is required. Further, the whole detector network can be operated without any human interaction, i.e. radiation sources of interest are measured and detected automatically and radiation sources of no relevance are removed automatically from the spectrum to be analyzed.

## Claims

1. Detector module for measuring one or more types of radiation, in particular X-ray, gamma ray, or nuclear particle radiation, comprising
- a detection unit consisting of a scintillation detector (10) and a photodetector (20) providing electronic pulses with a known relation to the intensity of the light produced by the scintillation detector,
- an analog-to-digital converter (ADC) (50) coupled to the photodetector, the ADC converting the analog output signal of the photodetector to a digitized radiation signal,
- an information processing device (40) coupled to the ADC, the information processing device performing a method of calibrating, stabilizing and linearizing the digitized radiation signal, and
- a communication network interface (30a),
wherein the information processing device further performs a method of transmitting the calibrated, stabilized, linearized, and digitized radiation signal via the communication network interface to an analysis device.

2. Detector module according to claim 1, wherein the information processing device (40) comprises at least one of a Digital Signal Processor (DSP), Application Specific Integrated Circuit (ASIC), Programmable Logic Device (PLD), and Microcontroller.

3. Detector module according to claim 1, wherein the information processing device (40) comprises a memory device (80) for storing the digitized, calibrated, stabilized and linearized radiation signal and wherein the method of calibrating, linearizing and stabilizing the digitized radiation signal comprises a step of storing the calibrated, stabilized and linearized, and digitized radiation signal.

4. Detector module according to claim 3, wherein the step of storing the calibrated, stabilized, linearized, and digitized radiation signal and the method of transmitting the calibrated, stabilized, linearized, and digitized radiation signal are performed asynchronously.

5. Detector module according to claim 1, wherein the communication network interface (30a) is at least one of a wireless communications interface, e.g. WLAN, WiFi, WiMAX, or Bluetooth, and wired communications interface, e.g. Ethernet interface or USB interface.

6. Detector module according to one of the previous claims, wherein the transmitted calibrated, stabilized, linearized, and digitized radiation signal includes a unique detector identifier.

7. Analysis device for analyzing digital data, preferably provided by a detector module according to one of the previous claims, comprising
- a communication network interface (30b) for receiving digital data, preferably calibrated, stabilized, linearized, and digitized radiation signals corresponding to one or more types of radiation, in particular X-ray, gamma ray, or nuclear particle radiation, and
- a sorter (70), preferably a multi-channel analyzer (MCA) for generating energy spectra using the received digital data.

8. Analysis device according to claim 7, wherein the MCA is implemented in software or in specialized integrated circuits.

9. Analysis device according to claim 7, wherein the communication network interface (30b) is at least one of a wireless communications interface, e.g. WLAN, WiMAX, WiFi, or Bluetooth, and wired communications interface, e.g. Ethernet interface or USB interface.

10. Analysis device according to on of claims 7 to 9, further comprising a storage device (92) for storing a plurality of reference energy spectra and / or generated energy spectra.

11. Analysis device according to on of claims 7 to 10, further comprising a storage device (91) for storing the received digital data, wherein the received digital data includes a unique detector identifier which is used to discriminate digital data received from different detector modules.

12. Analysis device according to claim 11, further comprising a comparator (100) which performs a method of comparing generated energy spectra with at least one of the stored reference energy spectra (template spectra) in order to determine whether or not a generated energy spectrum corresponds to at least one stored reference energy spectrum, wherein the comparing method being performed synchronously to the generation of the energy spectra.

13. Analysis device according to one of the claims 7 to 12, further comprising means for determining single events from the received digital data.

14. Detector system for detecting one or more types of radiation, in particular X-ray, gamma ray, or nuclear particle radiation, comprising at least one detector module according to one of claims 1 to 6 and an analysis device according to one of claims 7 to 13.
